# FASCICULE DE BREVET EUROPEEN

(11) **EP 1 765 914 B1**
(45) Date de publication et mention de la délivrance du brevet: **04.08.2021**
(21) Numéro de dépôt: 05777328.5
(22) Date de dépôt: 09.06.2005
(51) Int. Cl.: C08L 95/00, C08L 53/02, C08L 19/00, C08L 21/00, B29K 105/00, B29K 21/00, B29K 95/00, B29C 48/00, C08J 3/00, E01C 7/18

(54) **PROCEDE DE PREPARATION D"UN MELANGE BITUME-POLYMERE**
VERFAHREN ZUR HERSTELLUNG EINER BITUMEN-POLYMER-MISCHUNG
METHOD FOR PREPARING A BITUMEN-POLYMER MIXTURE

(30) Priorité: 16.06.2004 FR 0406525
(43) Date de publication de la demande: 28.03.2007
(73) Titulaire: Eiffage Infrastructures, 78140 Vélizy-Villacoublay (FR)
(72) Inventeur: ANTOINE, Jean-Pierre, F-69340 Francheville (FR); MARCILLOUX, Jérome, F-69360 Saint-Symphorien d'Ozon (FR)
(74) Mandataire: Cabinet Netter
(86) Numéro de dépôt international: PCT/FR2005/001432
(87) Numéro de publication internationale: WO 2006/003309

(56) Documents cités:
- EP-A- 0 131 397
- EP-A- 0 426 025
- EP-A- 1 203 793
- EP-A1- 0 343 027
- BE-A- 1 002 939
- CN-A- 1 300 801
- US-A- 4 385 142

## Description

L'invention concerne un procédé de préparation d'un mélange contenant du bitume et au moins un polymère.

Les bitumes purs sortis de raffinerie sont couramment utilisés pour fabriquer des liants anhydres ou en émulsion pour applications routières. Pour diminuer la sensibilité thermique de ces bitumes, augmenter leur cohésion ou leur élasticité et par conséquent améliorer le comportement du liant sous forte sollicitation, l'usage de polymères dispersés dans le bitume est également courant.

Cette incorporation se fait en général dans des usines dédiées comportant des cuves agitées, chauffées, connectées à des systèmes d'alimentation en bitume, en polymère et en additifs, ainsi qu'à des cuves de stockage où le liant peut être brassé, contribuant le cas échéant à sa maturation.

Selon le taux de modification recherché, des systèmes de réticulation ou de dispersion seront utilisés ou non. Par ailleurs, la durée nécessaire pour la dispersion peut varier fortement, affectant considérablement les cadences de production ainsi que les coûts. L'usage de certains additifs peut avoir un impact environnemental sensible.

Toute ces contraintes impliquent des investissements, parfois lourds, pour chaque site de production.

La mise en chauffe de cuves de malaxage qui peuvent contenir parfois plus de 50 m³ nécessite des quantités d'énergie importantes qui elles aussi sont répétées dans chaque usine.

L'évolution permanente des besoins, la proximité de chantiers nécessitant de fortes quantités de liants, aussi bien que la rationalisation des outils industriels, nécessitent l'extension des capacités de production ainsi qu'une plus grande souplesse de ces sites industriels. Outre le surcoût d'investissement correspondant à ces nouveaux besoins, la nécessité de chauffer et d'agiter des volumes supérieurs ou d'augmenter le nombre de lots par jour a un impact environnemental fort, aussi bien en matière de consommation d'énergie qu'en matière de rejets atmosphériques.

Afin de limiter ces surcoûts et impacts environnementaux, une solution consiste à réaliser des pré-mélanges appelés mélanges maîtres. Ces mélanges sont couramment utilisés pour la fabrication des liants pour enduits superficiels. Dans ce cas, l'usage de produits solvants du bitume appelés fluxants ou fluidifiants permet une pré-dissolution du polymère en grande quantité à des températures compatibles avec le point éclair de ces fluxants, ainsi que le pompage ultérieur du liant. Les polymères le plus souvent utilisés dans les bitumes sont les copolymères de styrène et de butadiène, qu'ils soient statistiques, biséquencés ou triséquencés. Les copolymères d'éthylène et d'acétate de vinyle sont également d'usage courant. D'autre polymères sont utilisés de manière marginale.

Après dispersion du mélange maître dans le bitume, le liant obtenu présente des caractéristiques très voisines de celles d'un liant équivalent obtenu de façon classique, c'est-à-dire par ajouts successifs de polymère puis de fluxant dans le bitume.

Dans le cas des liants d'enrobage, la situation est plus délicate. En effet, ces liants ne comportant pas de fluxant, un pré-mélange avec les technologies classiques incorporant de fort taux de polymères pose un problème de viscosité, et par conséquent nécessite une durée de fabrication longue.

Avec les technologies classiques, des teneurs supérieures à 20 % sont pratiquement inenvisageables.

FR 2 619 821 A décrit l'incorporation de particules de caoutchouc dans les liants et/ou dans les enrobés bitumineux.

Le document BE 1 002 939 divulgue un procédé de préparation par extrusion de compositions de bitume modifié, et des compositions de bitume-polymère utilisées dans ce procédé.

La faible compatibilité de ces particules avec le bitume impose le plus souvent l'usage d'additifs supplémentaires destinés à améliorer cette compatibilité, dont l'incorporation allonge la durée de fabrication.

Enfin, d'autres polymères tels que polyéthylènes, polypropylènes et autres polyoléfines peuvent être utilement ajoutés à l'enrobé de façon à améliorer la résistance à l'orniérage ou aux hydrocarbures. Ces polymères ne sont pas miscibles au bitume et sont donc ajoutés directement à l'enrobé lors du malaxage en poste d'enrobage.

Des études menées par la Demanderesse ont montré qu'un paramètre primordial dans la préparation des mélanges liant-polymère est la granulométrie du polymère. Plus celui-ci est finement dispersé, plus la durée d'agitation est courte. Cependant, le conditionnement des polymères sous forme de poudre a un coût d'autant plus élevé que la taille de cette dernière est petite. L'intérêt de l'optimisation des durées de malaxage en jouant sur ce paramètre est donc économiquement limitée.

La Demanderesse a également essayé de mélanger le polymère sous forme liquide avec le bitume. Les temps de malaxage sont alors très courts, le mélange étant quasi instantané. En revanche, l'énergie nécessaire au ramollissement du polymère est très importante et le temps nécessaire est long. Globalement, l'intérêt est limité, sauf à incorporer de grande quantité de polymère à des viscosités suffisamment faibles pour que le mélange au bitume soit instantané.

Le but de l'invention est de fournir un procédé pour incorporer des polymères dans des liants bitumineux en évitant les inconvénients des procédés connus.

L'invention vise notamment un procédé de préparation d'un mélange contenant du bitume et au moins un polymère, dans lequel on mélange du bitume et au moins un polymère par extrusion, tel que défini dans les revendications annexées.

Par extrusion, on entend tout traitement permettant le cisaillement d'une masse pâteuse et son transport à travers un orifice approprié pour obtenir un profilé. Dans le procédé selon l'invention, le brassage assure l'homogénéisation du mélange du bitume et du polymère introduits séparément dans l'extrudeuse. Ces opérations peuvent être effectuées au moyen d'une ou plusieurs vis de type vis d'Archimède.

Dans le cas d'une extrudeuse à au moins deux vis, ces dernières peuvent tourner dans le même sens ou en sens contraire. Dans tous les cas, les expérimentations ont montré que le mélange se faisait en quelques dizaines de secondes. Bien qu'aucun profil de vis particulier ne soit nécessaire, l'homme du métier pourra déterminer des profils appropriés afin d'optimiser les cadences ainsi que l'efficacité du malaxage.

Sauf indication contraire, tous les pourcentages donnés ici sont en masse.

Des caractéristiques optionnelles de l'invention, complémentaires ou de substitution, sont énoncées ci-après:
- On mélange par extrusion du bitume à l'état liquide et au moins un polymère à l'état fondu.
- Le polymère est choisi parmi un plastomère, un élastomère, une résine thermodurcissable et des mélanges de ceux-ci.
- Le polymère est un plastomère choisi parmi les polyéthylènes, polypropylènes et autres polyoléfines, les polystyrènes et tous copolymères obtenus par réaction de tout monomère avec une polyoléfine et/ou avec le styrène.
- L'élastomère est un élastomère naturel ou synthétique de préférence choisi parmi les copolymères comportant des motifs de styrène, butadiène ou tout autre diène, acrylonitrile, isoprène, chloroprène, acrylates, méthacrylates, éthylène, propylène, isobutène.
- L'élastomère est sous la forme de particules de caoutchouc issues du broyage de caoutchoucs neufs ou usagés.
- Le mélange contient un stabilisant pour le polymère.
- Le stabilisant comprend au moins du soufre et/ou un donneur de soufre et/ou un activateur de vulcanisation et/ou un accélérateur de vulcanisation ou au moins un peroxyde ou au moins un sel métallique.
- Le taux de stabilisant est compris entre 1 et 20 % par rapport au polymère, préférentiellement entre 3 et 10 %.
- La température du mélange peut être ajustée à des valeurs différentes le long de la cavité d'extrusion entre une zone d'introduction des constituants et un orifice de sortie, et est par exemple maximale dans la zone d'introduction et minimale au voisinage de l'orifice de sortie.
- Le mélange obtenu par extrusion est un mélange maître à fort taux de polymère destiné à être dilué dans un bitume pour fabriquer un liant bitumineux.
- Le taux de polymère dans le mélange maître est compris entre 10 et 90 %, préférentiellement entre 20 et 60 %.

L'invention a également pour objet un mélange maître obtenu par le procédé revendiqué pour application routière, ainsi que l'utilisation d'un tel mélange maître pour la fabrication par dilution d'un liant bitumineux anhydre ou en émulsion, fluxé ou non.

Selon des caractéristiques avantageuses:
- Le rapport du mélange maître au liant final est compris entre 5 et 80 %, préférentiellement entre 10 et 40 %.
- On dilue le mélange maître chaud directement après extrusion.
- On refroidit et facultativement on granule le mélange maître avant dilution.
- Le liant est mis en contact avec des fragments solides minéraux après dilution.
- Le mélange maître et le bitume de dilution sont mis en contact simultanément avec des fragments solides minéraux.

Un avantage de l'utilisation d'une extrudeuse est la possibilité de faire varier la température de travail le long du fourreau dans lequel tourne la vis. Il a été constaté qu'une température supérieure à 160 °C était préférable, dans le cas d'un copolymère triséquencé styrène-butadiène-styrène (SBS), dans les zones d'alimentation et de malaxage afin d'assurer le ramollissement de celui-ci. Dans les zones de transfert et au niveau de la filière, on pourra utilement diminuer la température afin de favoriser le refroidissement.

Selon l'invention, le mélange maître peut être utilisé chaud, directement après extrusion, ou froid après refroidissement et granulation éventuelle. L'utilisation à chaud est intéressante dans le cas où le mélange maître est immédiatement dilué selon un processus continu ou discontinu. Dans le cas d'un stockage avant dilution, le refroidissement ainsi que la granulation permettent d'éviter la consommation d'énergie liée à un maintien en température ainsi que l'investissement dans une pompe de très grosse capacité afin d'alimenter le mélangeur final en pré-mélange très visqueux.

Suivant le type et la quantité de polymère, les granulés de mélange maître peuvent être plus ou moins collants. Afin d'éviter leur agglomération, l'emploi d'un agent anti-collant pourra être retenu. Ce dernier pourra être choisi parmi les charges minérales (silices, talc...), les corps gras (acide gras, stéarates ou autres sels...) ou les polymères (silicones, polymères organofluorés, polyéthylène...).

Les agents anti-collants peuvent être ajoutés directement dans l'extrudeuse. De façon préférentielle, toutefois, ils seront appliqués à la surface du profilé lors du refroidissement en sortie d'extrudeuse. Pour ce faire, on choisira notamment des substances capables d'être dissoutes ou mises en suspension dans l'eau.

Les profilés seront, selon les cas, très élastiques, mous ou durs. Le granulateur sera choisi en conséquence.

Les essais menés ont montré que, de façon surprenante, la taille des granulés intervenait peu dans la vitesse de fabrication du liant final par dilution. Il s'agit d'une différence majeure avec l'incorporation de poudre selon l'état de la technique, cette poudre devant être la plus fine possible.

Tout aussi surprenante est la diminution considérable du temps de dilution nécessaire à l'obtention d'un liant commercial, notamment pour les produits les plus riches en polymère nécessitant les temps de mélange les plus longs, pour lesquels on a observé un facteur quatre. Ainsi, dans le cas d'un bitume 70/100 comprenant 5 % de SBS, le temps nécessaire à l'obtention d'une dispersion homogène passe-t-il de 70 minutes au moins à 5 à 20 minutes, selon le mode opératoire.

L'aspect du liant est par ailleurs beaucoup plus lisse et brillant. On évite l'aspect "peau d'orange" que l'on obtient avec les procédés classiques.

Les caractéristiques et avantages de l'invention sont exposés plus en détail dans la description ci-après, avec référence aux dessins annexés.

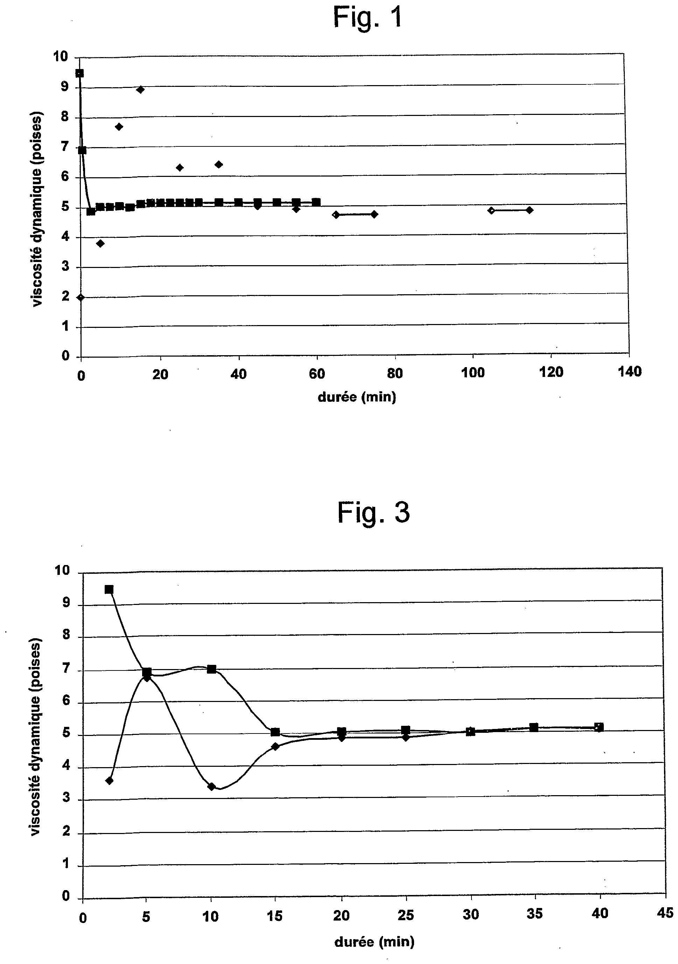

Les figures 1 à 3 sont des graphiques représentant la variation de la viscosité de différents liants bitumineux en fonction du temps de malaxage.

Les exemples qui suivent montrent que les liants obtenus selon l'invention ont non seulement des caractéristiques physiques au moins équivalentes à celles des liants connus, mais également une stabilité en stockage améliorée. Cela rend possible le pré-mélange même avec des polymères a priori incompatibles avec le bitume. Le refroidissement du mélange maître, qui ralentit la séparation de phases, améliore encore cette propriété.

La dilution peut précéder immédiatement l'utilisation du liant, simplifiant la fabrication de l'enrobé. Celle-ci peut être encore simplifiée par l'ajout du mélange maître directement dans le poste d'enrobage en même temps que le bitume servant à ajuster la teneur finale en bitume.

On le voit, le procédé permet de diminuer considérablement les temps de fabrication des liants bitumineux.

Effectuée dans des extrudeuses travaillant sur des volumes beaucoup plus limités que les réacteurs classiques, la fabrication du mélange maître nécessite peu d'énergie. L'échauffement de la matière provoqué par les cisaillements très importants intervenant au sein de l'extrudeuse contribue également à la diminution de l'énergie nécessaire au processus.

De façon surprenante, les essais effectués ont montré que le temps nécessaire à l'obtention d'un mélange homogène variait peu avec la teneur en polymère dans le mélange maître (voir exemple 3).

Le gain énergétique sera par conséquent d'autant plus important que la teneur en polymère sera élevée.

Le gain aussi bien énergétique qu'en cadence de production est encore plus marqué dans le cas de l'incorporation de particules de caoutchouc.

Dans ce cas, il est possible d'incorporer au moment de l'extrusion les additifs prévus dans FR 2 619 821 A pour faciliter la dispersion. La fabrication du liant final nécessite alors environ 1 minute d'extrusion et 30 minutes de dilution, contre 3 heures selon le procédé du document antérieur.

Enfin, les performances des liants contenant des polymères élastomères diéniques peuvent être optimisées par l'emploi d'un système dit de "vulcanisation" qui permet de stabiliser la dispersion et d'abaisser les quantités de polymère nécessaires à l'obtention des caractéristiques recherchées de ces liants.

FR 2 617 491 A décrit un procédé dans lequel la teneur en vulcanisant est d'environ 20 % par rapport au polymère.

L'ajout de telles quantités dans l'extrudeuse peut conduire à une vulcanisation trop poussée se traduisant par une prise en masse. Une teneur inférieure ou égale à 5 % est donc préférée dans la présente invention. (voir exemple 4). Il en résulte un gain environnemental puisque les systèmes de vulcanisation contiennent des composés soufrés susceptibles de produire H₂S lors de la réaction. Lés rejets sont ainsi diminués. En outre, la mise en place d'une aspiration au-dessus de l'extrudeuse permet de façon simple d'éviter tout rejet dans l'environnement.

La dilution des mélanges maîtres vulcanisés se fait dans les mêmes conditions que celle des mélanges maîtres non vulcanisés. Les caractéristiques du liant obtenu avec ces teneurs en vulcanisant réduites sont identiques à celles obtenues par le procédé décrit dans FR 2 617 491 A.

Les exemples ci-après utilisent un bitume 70/100 et un SBS linéaire commercialisé par la société Kraton sous la dénomination 1101 CM.

Afin d'évaluer le temps de malaxage nécessaire pour obtenir les liants étudiés, des mesures de viscosité dynamique en fonction du temps ont été effectuées à 150 °C à l'aide d'un appareil de type Brookfield cap 1000 équipé d'un cône plan de taille 3.

### Exemple 1

On a préparé deux liants à 5 % de SBS, l'un par mélange direct du SBS en poudre (diamètre moyen 1 mm) et du bitume (témoin), l'autre par les étapes suivantes (invention):
- mélange en extrudeuse monovis, en 20 à 40 secondes, de 30 % de SBS et de 70 % de bitume, la température étant de 180 °C dans toute l'extrudeuse;
- dilution du mélange maître obtenu, maintenu à 160° C, à raison de 16,7 % dans le bitume.

Les résultats des mesures de viscosité sont reportés sur la figure 1, le symbole ■ correspondant à l'invention et le symbole ◆ au témoin.

Les oscillations observées sur la courbe témoin résultent d'une hétérogénéité de la dispersion de polymère qui prouve que ce dernier n'est pas complètement dispersé. Survient ensuite un plateau de viscosité qui montre que la dispersion est uniforme. Le temps nécessaire pour atteindre ce plateau est retenu comme temps de dispersion.

Dans le cas de la dispersion à chaud du mélange maître, on constate qu'après 5 minutes de dispersion le plateau est déjà atteint, alors que 70 minutes sont nécessaires avec le procédé classique.

### Exemple 2

Après extrusion, un mélange maître à 40 % de SBS a été laissé au repos jusqu'à atteindre la température ambiante, puis granulé manuellement à une taille de granulés comprise entre 0,5 et 3 mm. Les granulés ont été dispersés à raison de 12,5 % dans le bitume. L'ajout des granulés froids dans le bitume à 170 °C a été effectué en une fois en 10 secondes.

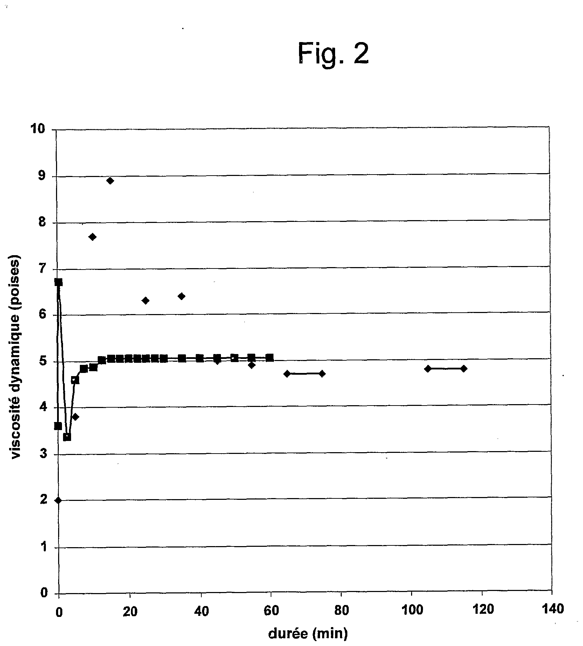

L'évolution de la viscosité est donnée sur la figure 2 (symbole ■), en comparaison de la courbe témoin de la figure 1.

Si la dispersion des granulés s'effectue plus lentement que celle du mélange maître chaud, le gain de temps reste significatif, puisque 20 minutes suffisent au lieu des 70 minutes du témoin.

### Exemple 3

Deux mélanges maîtres contenant respectivement 30 et 40 % de SBS ont été fabriqués, refroidis à la température ambiante, puis granulés pour obtenir des granulés de taille comprise entre 0,5 et 3 mm. Ces mélanges maîtres ont été dilués avec du bitume à 170 °C pour obtenir une teneur finale en polymère de 5 %.

L'évolution de la viscosité est donnée sur la figure 3 (■ = 30 %, ◆ = 40 %).

De façon surprenante, il semble que la teneur en SBS du mélange maître influence très peu la vitesse de dispersion dans le bitume.

Les caractéristiques d'usage des liants obtenus ont été comparés à celles du liant témoin. Aucune différence significative n'a pu être mesurée. On a cependant observé une meilleure stabilité en stockage.

### Exemple 4

Comme déjà décrit, une solution technique intéressante pour l'optimisation des quantités et des performances des polymères diéniques dans le bitume est l'emploi de systèmes dits de vulcanisation, mélanges complexes de soufre, de donneur de soufre, d'accélérateur de vulcanisation et d'activateur de vulcanisation.

On a mélangé dans une extrudeuse bi-vis du bitume avec 20 % de SBS et 3 % d'une composition de vulcanisation selon FR 2 619 821 A, soit un rapport composition de vulcanisation/polymère égal à 15 % comme utilisé dans une fabrication classique. La formation d'un gel bouchant l'extrudeuse a été immédiate. Des essais ont par conséquent été effectués en utilisant respectivement 2/3 et 1/3 de cette quantité habituelle. Dans les deux cas, l'extrusion a été possible sans la moindre difficulté. Les mélanges maîtres ont été refroidis à température ambiante.

La granulation du mélange maître vulcanisé avec 2 % de composition de vulcanisation est apparue difficile du fait d'une élasticité exceptionnelle. Celui à 1 % n'a pas posé de problème et a été ajouté à du bitume à 170 °C pour obtenir un liant contenant 5,5 % de polymère.

Les mesures de viscosité indiquent, ici encore, que le temps de dispersion est divisé par 4 par rapport à une fabrication classique.

Les caractéristiques physiques du liant obtenu sont identiques à celles du mélange classique et par conséquent conformes aux spécifications internes de la Demanderesse comme le montre le tableau.

**Tableau**

| | Liant | Spécification |
|---|---|---|
| Pénétrabilité selon NF EN 1426 | 51 | 40-70 |
| Température bille et anneau (°C) selon NF EN 1427 | 84,5 | >65 |
| % de polymère | 5,5 | 5 |
| Stabilité en stockage selon méthode interne | oui | non |
| Cohésion selon NF T 66.037 | | |
| Cohésion maxi | 1,6 | >1,5 |
| Température maxi (°C) | 40 | 40 |
| Intervalle de température (°C) | 39 | - |

Une division par trois des quantités d'agent vulcanisant a bien évidemment un impact extrêmement positif en matière d'environnement et d'économie. Les quelques rejets atmosphériques liés à son emploi sont par ailleurs aisément aspirés et fixés dans un système d'aspiration surmontant l'extrudeuse. La centralisation de la fabrication des mélanges maîtres vulcanisés permet également d'éviter les investissements correspondants dans les usines de fabrication des liants finaux. Celles-ci peuvent ainsi en outre accéder à une technologie intéressante tant économiquement que techniquement, avec un faible impact sur l'environnement.

## Revendications

1. Procédé de préparation d'un mélange contenant du bitume et au moins un polymère, dans lequel on mélange du bitume et au moins un polymère par extrusion et dans lequel le mélange obtenu par extrusion est un mélange maître à fort taux de polymère destiné à être dilué dans un bitume pour fabriquer un liant bitumineux, **caractérisé en ce que** le polymère est un copolymère triséquencé styrène-butadiène-styrène (SBS) dont le taux massique dans le mélange maître est compris entre 20 et 40 %, et **en ce que** la température du mélange est ajustée à des valeurs différentes le long de la cavité d'extrusion entre une zone d'introduction des constituants et un orifice de sortie.

2. Procédé selon la revendication 1, dans lequel le taux massique du polymère dans le mélange maître est de 20 %.

3. Procédé selon l'une des revendications précédentes, dans lequel on mélange par extrusion du bitume à l'état liquide et au moins un polymère à l'état fondu.

4. Procédé selon l'une des revendications précédentes, dans lequel le mélange maître contient un stabilisant pour le polymère.

5. Procédé selon la revendication 4, dans lequel le stabilisant comprend au moins du soufre et/ou un donneur de soufre et/ou un activateur de vulcanisation et/ou un accélérateur de vulcanisation ou au moins un peroxyde ou au moins un sel métallique.

6. Procédé selon l'une des revendications 4 et 5, dans lequel le taux massique de stabilisant est compris entre 1 et 20 % par rapport au polymère, préférentiellement entre 3 et 10 %.

7. Procédé selon l'une des revendications précédentes, dans lequel ladite température est maximale dans la zone d'introduction et minimale au voisinage de l'orifice de sortie.

8. Mélange maître obtenu par le procédé selon l'une des revendications 1 à 7 pour applications routières.

9. Utilisation d'un mélange maître selon la revendication 8 pour la fabrication par dilution d'un liant bitumineux anhydre ou en émulsion, fluxé ou non.

10. Utilisation selon la revendication 9, dans laquelle le rapport massique du mélange maître au liant final est compris entre 5 et 80 %, préférentiellement entre 10 et 40 %.

11. Utilisation selon l'une des revendications 9 et 10, dans laquelle on dilue le mélange maître chaud directement après extrusion.

12. Utilisation selon l'une des revendications 9 et 10, dans laquelle on refroidit et facultativement on granule le mélange maître avant dilution, avec le cas échéant utilisation d'agents anti-collants.

13. Utilisation selon l'une des revendications 9 à 12, dans laquelle le liant est mis en contact avec des fragments solides minéraux après dilution.

14. Utilisation selon l'une des revendications 9 à 12, dans laquelle le mélange maître et le bitume de dilution sont mis en contact simultanément avec des fragments solides minéraux.

## Patentansprüche

1. Verfahren zur Vorbereitung einer Mischung, die Bitumen und mindestens ein Polymer enthält, wobei Bitumen und mindestens ein Polymer durch Extrusion gemischt werden und wobei es sich bei der durch Extrusion erhaltenen Mischung um eine Grundmischung mit hohem Polymeranteil handelt, die dazu bestimmt ist, in einem Bitumen verdünnt zu werden, um ein bituminöses Bindemittel anzufertigen, **dadurch gekennzeichnet, dass** es sich bei dem Polymer um ein Dreiblock-Copolymer Styrol-Butadien-Styrol (SBS) handelt, dessen Massenanteil in der Grundmischung zwischen 20 und 40 % liegt, und dadurch, dass die Temperatur der Mischung entlang des Extrusionshohlraums zwischen einem Einführbereich der Bestandteile und einer Austrittsöffnung auf verschiedene Werte eingestellt wird.

2. Verfahren nach Anspruch 1, wobei der Massenanteil des Polymers in der Grundmischung 20 % beträgt.

3. Verfahren nach einem der vorstehenden Ansprüche, wobei Bitumen in flüssigem Zustand und mindestens ein Polymer in geschmolzenem Zustand durch Extrusion gemischt werden.

4. Verfahren nach einem der vorstehenden Ansprüche, wobei die Grundmischung einen Stabilisator für das Polymer enthält.

5. Verfahren nach Anspruch 4, wobei der Stabilisator mindestens Schwefel und/oder einen Schwefelspender und/oder einen Vulkanisationsaktivator und/oder einen Vulkanisationsbeschleuniger oder mindestens ein Peroxid oder mindestens ein Metallsalz umfasst.

6. Verfahren nach einem der Ansprüche 4 und 5, wobei der Massenanteil an Stabilisator, auf das Polymer bezogen, zwischen 1 und 20 %, vorzugsweise zwischen 3 und 10 % liegt.

7. Verfahren nach einem der vorstehenden Ansprüche, wobei die Temperatur im Einführbereich maximal und in der Nähe der Austrittsöffnung minimal ist.

8. Grundmischung, die über das Verfahren nach einem der Ansprüche 1 bis 7 erhalten wird, für Straßen-Anwendungen.

9. Verwendung einer Grundmischung nach Anspruch 8 zur Anfertigung eines wasserfreien oder emulgierten, gefluxten oder nicht gefluxten bituminösen Bindemittels durch Verdünnen.

10. Verwendung nach Anspruch 9, wobei das Massenverhältnis der Grundmischung zum fertigen Bindemittel zwischen 5 und 80 %, vorzugsweise zwischen 10 und 40 % liegt.

11. Verwendung nach einem der Ansprüche 9 und 10, wobei die heiße Grundmischung direkt nach Extrusion verdünnt wird.

12. Verwendung nach einem der Ansprüche 9 und 10, wobei die Grundmischung vor dem Verdünnen abgekühlt und fakultativ granuliert wird, gegebenenfalls unter Verwendung von Antiklebemitteln.

13. Verwendung nach einem der Ansprüche 9 bis 12, wobei das Bindemittel nach dem Verdünnen mit festen mineralischen Bruchstücken in Kontakt gebracht wird.

14. Verwendung nach einem der Ansprüche 9 bis 12, wobei die Grundmischung und das Verdünnungsbitumen gleichzeitig mit festen mineralischen Bruchstücken in Kontakt gebracht werden.

## Claims

1. Method for preparing a mixture containing bitumen and at least one polymer, wherein bitumen and at least one polymer by extrusion are mixed and wherein the mixture obtained by extrusion is a master batch with a high polymer content intended to be diluted in a bitumen to manufacture a bituminous binder, **characterised in that** the polymer is a styrene-butadiene-styrene (SBS) triblock copolymer of which the mass rate in the master batch is comprised between 20 and 40%, and **in that** the temperature of the mixture is adjusted to different values along the extrusion cavity between a zone for introducing constituents and an outlet orifice.

2. Method according to claim 1, wherein the mass rate of the polymer in the master batch is 20%.

3. Method according to one of the preceding claims, wherein liquid-state bitumen and at least one melted-state polymer are mixed via extrusion.

4. Method according to one of the preceding claims, wherein the master batch contains a stabiliser for the polymer.

5. Method according to claim 4, wherein the stabiliser comprises at least sulphur and/or a sulphur donor and/or a vulcanisation activator and/or a vulcanisation accelerator or at least one peroxide or at least one metal salt.

6. Method according to one of claims 4 and 5, wherein the stabiliser mass rate is comprised between 1 and 20% in relation to the polymer, preferably between 3 and 10%.

7. Method according to one of the preceding claims, wherein said temperature is maximal in the introduction zone and minimal in the vicinity of the outlet orifice.

8. Master batch obtained by the method according to one of claims 1 to 7 for road applications.

9. Use of a master batch according to claim 8 for the manufacturing by dilution of a bituminous binder anhydrous or in emulsion, fluxed or not.

10. Use according to claim 9, wherein the mass ratio of the master batch to the final binder is comprised between 5 and 80%, preferably between 10 and 40%.

11. Use according to one of claims 9 and 10, wherein the hot master batch is diluted directly after extrusion.

12. Use according to one of claims 9 and 10, wherein the master batch is cooled and optionally granulated before dilution, where applicable with use of non-stick agents.

13. Use according to one of claims 9 to 12, wherein the binder is contacted with mineral solid fragments after dilution.

14. Use according to one of claims 9 to 12, wherein the master batch and the dilution bitumen are contacted simultaneously with mineral solid fragments.
